# FASCICULE DE BREVET EUROPEEN

(11) **EP 1 953 899 B1**
(45) Date de publication et mention de la délivrance du brevet: **06.03.2019**
(21) Numéro de dépôt: 08150369.0
(22) Date de dépôt: 17.01.2008
(51) Int. Cl.: H02K 7/116, H02K 9/19, H02K 19/38, H02K 11/042

(54) **Ensemble de transmission et de démarreur-générateur pour une turbine à gaz**
Verbund aus Getriebe und Starter-Generator für eine Gasturbine
Assembly of gear box and starter-generator for a gas turbine

(30) Priorité: 31.01.2007 FR 0752985
(43) Date de publication de la demande: 06.08.2008
(73) Titulaire: Safran Electrical & Power, 31702 Blagnac Cedex (FR)
(72) Inventeur: Becquerelle, Samuel, Raymond, Germain, 78180, MONTIGNY LE BRETONNEUX (FR); Galivel, Jean Pierre, 77176, SAVIGNY LE TEMPLE (FR)
(74) Mandataire: Delumeau, François Guy

(56) Documents cités:
- WO-A-03/021750
- DE-A1- 19 935 074
- FR-A- 2 011 493
- GB-A- 870 851
- US-A- 2 897 383
- US-A- 4 609 842
- US-A- 5 424 593

## Description

### Arrière-plan de l'invention

L'invention concerne les turbines à gaz et plus particulièrement le montage d'un démarreur/générateur (ou S/G, pour "Starter/Generator") sur une boîte de transmission, ou boîte de relais d'accessoires. Le domaine d'application de l'invention est celui des turbines à gaz pour moteurs aéronautiques, d'avions ou d'hélicoptères, ainsi que pour des groupes auxiliaires de puissance (ou APU, pour "Auxiliary Power Unit").

Dans une turbine à gaz, un certain nombre d'équipements, ou accessoires, sont entraînés par une transmission mécanique à partir d'une puissance mécanique prélevée sur un arbre de turbine. Cette transmission mécanique, qui comprend un ensemble de pignons logés dans un carter, est dénommée boîte de transmission ou boîte de relais d'accessoires. Les accessoires comprennent notamment diverses pompes pour la production d'énergie hydraulique, l'alimentation en carburant, la lubrification, ainsi qu'un ou plusieurs S/G électriques.

Lorsque la turbine à gaz est en fonctionnement, le ou chaque S/G fonctionne comme un générateur électrique et produit une tension électrique qui alimente un ou plusieurs centres de distribution d'énergie électrique pour l'avion ou l'hélicoptère et son ou ses moteurs.

Lorsque la turbine à gaz est à l'arrêt, un S/G peut fonctionner comme démarreur en étant alimenté par une source d'énergie extérieure afin de mettre en route la turbine à gaz par mise en rotation de l'arbre de turbine auquel la boîte de transmission est connectée.

Un S/G de type connu comprend une génératrice synchrone principale avec un rotor principal et un stator principal, et une excitatrice ayant un induit au rotor et un inducteur au stator. L'induit de l'excitatrice alimente le rotor principal de la génératrice synchrone à travers un redresseur tel qu'un pont de diodes tournantes. En mode génération d'énergie électrique, l'induit de la génératrice synchrone produit une tension alternative par suite de l'entraînement en rotation de l'inducteur alimenté par un courant continu délivré par le pont de diodes de l'excitatrice, la fréquence de la tension alternative produite étant variable en fonction de la vitesse de rotation. En mode démarrage, le rotor principal alimenté par l'excitatrice et le stator principal alimenté par une tension alternative à partir d'une source externe fonctionnent comme un moteur synchrone.

Un tel S/G connu est un équipement relativement volumineux qui est habituellement monté dans un boîtier particulier sur un côté de la boîte de transmission et qui est mécaniquement relié à celle-ci. Il en résulte un encombrement important et une masse importante en porte-à-faux qui demande des moyens d'attache suffisamment dimensionnés pour le montage sur la boîte de transmission.

### Objet et résumé de l'invention

L'invention a pour but de proposer une architecture d'un S/G qui permette une réduction de masse et d'encombrement tout en préservant une démontabilité aisée pour maintenance ou réparation.

Ce but est atteint grâce à un ensemble comportant une boîte de transmission de turbine à gaz, ayant un train d'engrenages avec plusieurs pignons logés dans un carter et au moins un démarreur-générateur modulaire de turbine à gaz couplé mécaniquement à la boite de transmission et comprenant une génératrice avec un rotor formant inducteur et un stator formant induit et une excitatrice avec un stator formant inducteur et un rotor formant induit, le démarreur-générateur comportant :
- un premier module, ou module de génératrice, comprenant un premier boîtier, la génératrice logée dans le premier boîtier et un premier arbre solidaire en rotation du rotor de la génératrice faisant saillie hors du premier boîtier et portant un premier organe d'accouplement mécanique,
- un deuxième module, ou module d'excitatrice, comprenant un deuxième boîtier, l'excitatrice logée dans le deuxième boîtier et un deuxième arbre solidaire en rotation du rotor de l'excitatrice, le deuxième arbre étant distinct du premier arbre, faisant saillie hors du deuxième boîtier et portant un deuxième organe d'accouplement mécanique, et
- une liaison électrique comprenant un redresseur et au moins un connecteur pour relier l'induit de l'excitatrice à l'inducteur de la génératrice, chacun des premier et deuxième organes d'accouplement étant couplé à au moins un pignon de la boîte de transmission, et chacun des premier et deuxième boîtiers étant raccordé au carter de la boîte de transmission.

Grâce à l'architecture modulaire du S/G, les modules de génératrice et d'excitatrice ayant des arbres d'accouplement mécanique distincts peuvent être montés séparément sur une boîte de transmission. Ainsi, la masse en porte-à-faux sur la boîte de transmission peut être moins importante. En outre et grâce aussi à la possibilité de déconnexion de la liaison électrique, on peut démonter seulement le module de génératrice ou le module d'excitatrice pour maintenance ou remplacement.

Selon une particularité, la liaison électrique est logée au moins partiellement dans les premier et deuxième arbres, ceux-ci pouvant être creux ou munis d'un passage pour la liaison électrique.

Selon une autre particularité, le S/G comprend en outre un générateur à aimants permanents ayant un rotor portant des aimants permanents et un stator formant induit, et le générateur à aimants permanents fait partie de l'un desdits modules, est logé à l'intérieur du boîtier de ce module et a son rotor solidaire en rotation de l'arbre de ce module. De préférence, le générateur à aimants permanents fait partie du module d'excitatrice.

Au moins l'un des modules peut être associé à un dispositif d'alimentation en liquide de refroidissement/lubrification propre à ce module. Dans ce cas, avantageusement, l'arbre du module associé à un dispositif propre d'alimentation en liquide de refroidissement/lubrification fait saillie du boîtier de ce module à travers une ouverture munie d'un dispositif d'étanchéité.

Dans un mode de réalisation, les premier et deuxième arbres sont coaxiaux et couplés à un même pignon de la boîte de transmission, et les boîtiers des premier et deuxième modules sont raccordés séparément au carter de la boîte de transmission sur deux côtés opposés de celle-ci.

Dans un autre mode de réalisation, les premier et deuxième arbres ne sont pas coaxiaux et les organes d'accouplement sont couplés à des pignons respectifs distincts de la boîte de transmission. Les boîtiers des premier et deuxième modules sont raccordés séparément au carter de la boîte de transmission d'un même côté de celle-ci ou sur deux cotés opposés de celle-ci. Dans cet autre mode de réalisation, la liaison électrique peut comprendre un premier raccord électrique tournant ayant des contacts fixes et des contacts tournants reliés à l'induit de l'excitatrice, un deuxième raccord électrique tournant ayant des contacts fixes et des contacts tournants reliés à l'inducteur de la génératrice, et une liaison fixe reliant les contacts fixes du premier raccord tournant aux contacts fixes respectifs du deuxième raccord tournant. Avantageusement alors, le redresseur, tel qu'un pont de diodes est inséré dans la liaison fixe pour ne pas être exposé aux contraintes engendrées par la rotation.

Dans tous les cas, l'un au moins des modules peut être alimenté en liquide de refroidissement/lubrification à partir d'un circuit de liquide de refroidissement/lubrification de la boîte de transmission.

### Brève description des dessins

L'invention sera mieux comprise à la lecture de la description faite ci-après, à titre indicatif mais non limitatif, en référence aux dessins annexés sur lesquels :
- la figure 1 est un schéma très simplifié d'un moteur à turbine à gaz ;
- la figure 2 est un schéma électrique simplifié d'un mode de réalisation d'un démarreur-générateur ;
- la figure 3 est une vue en coupe axiale d'un module de génératrice selon un mode de réalisation de l'invention ;
- la figure 4 est une vue en coupe axiale d'un module d'excitatrice selon un mode de réalisation de l'invention ;
- la figure 5 est une vue schématique en coupe montrant les modules de génératrice et d'excitatrice des figures 3 et 4 montés sur une boîte de transmission selon un mode de réalisation de l'invention ;
- la figure 6 est une vue très schématique montrant une variante de réalisation de l'alimentation du module de génératrice de la figure 5 en liquide de refroidissement/lubrification ;
- la figure 7 est une vue schématique partielle en coupe montrant des modules de génératrice et d'excitatrice montés sur une boîte de transmission selon un autre mode de réalisation de l'invention.

### Description détaillée de modes de réalisation

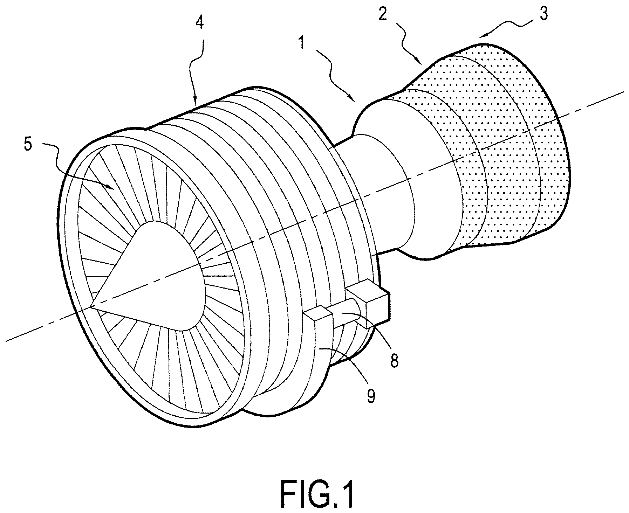

Un domaine d'application de l'invention est celui des moteurs d'avions à turbine à gaz, tel que celui représenté très schématiquement sur la figure 1, l'invention étant toutefois applicable à d'autres moteurs aéronautiques à turbine à gaz, typiquement des moteurs d'hélicoptères, ainsi qu'à des groupes auxiliaires de puissance à turbine à gaz.

Le moteur de la figure 1 comprend une chambre de combustion 1, les gaz de combustion issus de la chambre 1 entraînant une turbine haute-pression 2 et une turbine basse-pression 3. La turbine 2 est couplée par un arbre à un compresseur haute-pression 4 alimentant la chambre de combustion 1 en air sous pression tandis que la turbine 3 est couplée par un autre arbre à une soufflante 5 en entrée du moteur.

Une boîte de transmission 9, ou boîte de relais d'accessoires est reliée par une prise de puissance mécanique 8 à un arbre de turbine et comprend un ensemble de pignons pour l'entraînement de différents accessoires, dont au moins un (généralement deux) démarreur/générateur ou S/G.

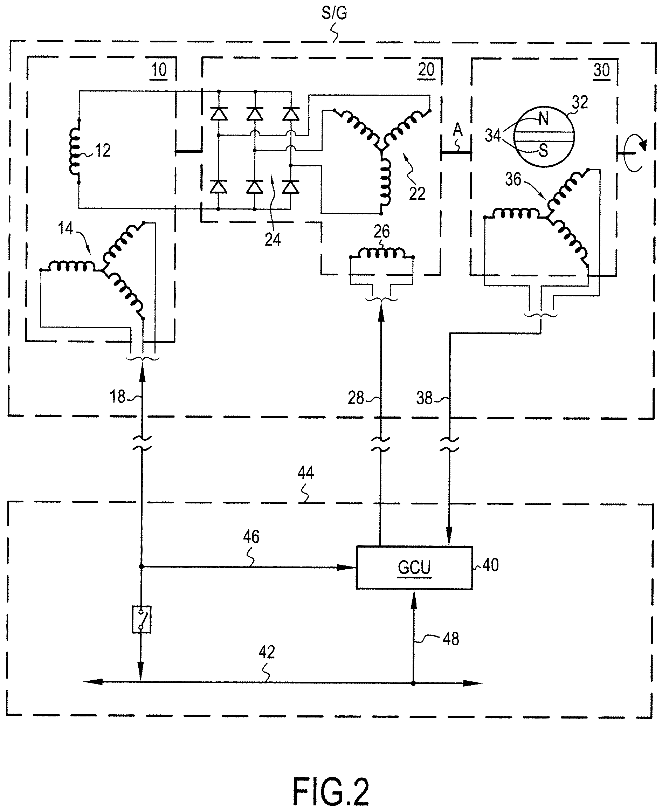

La figure 2 montre de façon simplifiée le schéma électrique général d'un S/G comprenant une génératrice synchrone 10, une excitatrice 20 et un générateur 30 à aimants permanents, ou PMG (pour "Permanent Magnet Generator") dont les parties tournantes ou rotors sont ici coaxiales et montées sur un même arbre rotatif d'axe A.

La génératrice synchrone 10 formant machine principale a un rotor principal formant inducteur 12 et un stator principal formant induit 14. L'excitatrice 20 a un rotor formant induit 22 auquel est relié un redresseur tel qu'un pont de diodes tournant 24, et un stator formant inducteur 26. Le PMG 30 a un rotor 32 portant des aimants permanents 34 et un stator formant induit 36.

En mode de génération d'énergie électrique, l'inducteur 12 de la génératrice synchrone qui est relié au redresseur 24 reçoit du courant continu produit par l'excitatrice et une tension alternative est produite par l'induit 14 et est transmise par un harnais 18 sur un bus AC 42 d'un circuit de distribution d'énergie électrique tel qu'un réseau de bord 44 d'un avion ou hélicoptère. Un circuit de régulation 40, ou GCU (pour "Generator Control Unit"), est alimenté par le PMG 30 via un harnais 38. Le circuit 40 reçoit par une ligne 46 une information représentative de la valeur de la tension alternative de sortie produite par la génératrice 10 et commande le courant continu fourni à l'inducteur 26 de l'excitatrice via un harnais 28 afin de réguler l'amplitude de la tension de sortie à une valeur de référence, cette tension ayant une fréquence variable en fonction de la vitesse de rotation de l'arbre A.

En mode démarreur, le circuit de régulation 40 est alimenté en tension par une ligne 48 à partir du bus AC 42 (ou d'une autre source), pour assurer son fonctionnement et pour alimenter l'inducteur 26 de l'excitatrice en courant alternatif. Dans le même temps, l'induit 14 est alimenté en courant alternatif par le harnais 18 à partir du bus AC 42 (ou d'une autre source), le fonctionnement étant alors celui d'un moteur synchrone.

Un S/G tel que décrit ci-avant, ainsi que son fonctionnement et sa régulation par un GCU, sont de type connu en soi, le PMG, l'excitatrice et la génératrice synchrone formant, en mode de génération de puissance électrique, une succession d'étages avec amplification d'un étage à l'autre. On notera que la présence du PMG n'est pas requise si le circuit de régulation 40 peut être alimenté par ailleurs. On notera aussi que les fonctions du GCU pourraient être intégrées à un circuit de régulation électronique du moteur, ou ECU (pour "Engine Control Unit").

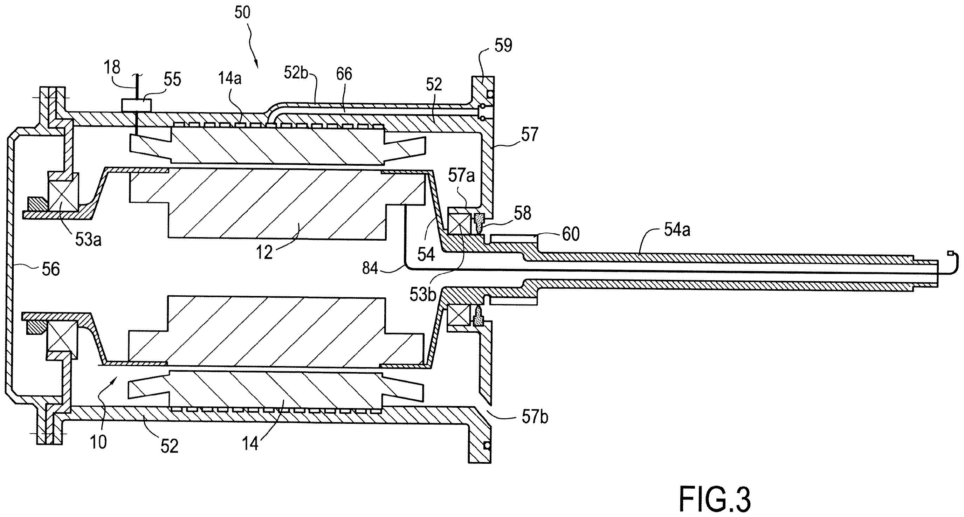

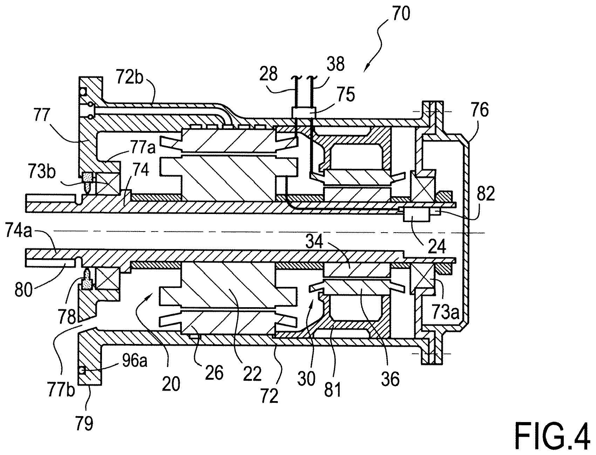

Les figures 3 et 4 illustrent des modes de réalisation d'un module de génératrice 50 et d'un module d'excitatrice 70 conformément à l'architecture modulaire d'un S/G selon l'invention.

Le module de génératrice 50 comprend la génératrice principale synchrone 10 qui est logée dans un boîtier 52. Le rotor de la génératrice, portant les enroulements de l'inducteur 12 est monté sur un arbre 54 supporté dans le boîtier 52 par des paliers à roulements 53a, 53b. Le stator de la génératrice portant les enroulements de l'induit 14 est fixé au boîtier 52 à l'intérieur de celui-ci. Le harnais 18 transportant la tension produite est relié à l'induit 14 en traversant la paroi 52 de façon étanche ou, comme illustré, en étant raccordé à un bloc de connexion 55 lui-même relié à l'induit 14. Le boîtier 52, de forme générale cylindrique, est fermé de façon étanche à une extrémité, ou extrémité arrière, par un fond 56 fixé par exemple par boulonnage à l'arrière du boîtier 52 où le palier 53a est supporté. A son extrémité avant, le boîtier 52 est fermé par une paroi 57. La paroi 57 présente une ouverture centrale délimitée par une partie annulaire 57a solidaire de la paroi 57. La partie annulaire 57a porte le palier 53b et porte également un joint d'étanchéité à lèvre 58 dont l'extrémité s'appuie sur la surface externe de l'arbre 54, ou tout autre système d'étanchéité par exemple un joint tournant ou un dispositif de type labyrinthe.

L'arbre 54 fait saillie à travers l'ouverture de la paroi 57 en se prolongeant à l'extérieur du boîtier 52 par une partie 54a de diamètre réduit. Celle-ci porte un organe d'accouplement mécanique sous forme par exemple de cannelures 60 et se prolonge au-delà de celles-ci.

Le module d'excitatrice 70 comprend l'excitatrice 20 et le PMG 30 qui sont logés dans un boîtier 72. Le rotor de l'excitatrice, portant les enroulements de l'induit 22 est monté sur un arbre 74 supporté dans le boîtier 72 par des paliers 73a, 73b. Le stator de l'excitatrice portant les enroulements de l'inducteur 26 est fixé au boîtier 72 à l'intérieur de celui-ci. Le harnais 28 amenant le courant d'alimentation de l'inducteur 26 est relié à celui-ci en traversant la paroi du boîtier 72 de façon étanche ou, comme dans l'exemple illustré, en étant raccordé à un bloc de connexion 75 lui-même relié à l'inducteur 26.

Le boîtier 72, de forme générale cylindrique, est fermé de façon étanche à une extrémité, ou extrémité arrière, par un fond 76 et fixé par exemple par boulonnage à l'arrière du boîtier 72 où le palier 73a est supporté. A son extrémité avant, le boîtier 72 est délimité par une paroi 77 solidaire d'une partie annulaire 77a entourant une ouverture centrale. La partie annulaire 77a porte le palier 73a et porte également un joint d'étanchéité à lèvres 78 dont l'extrémité s'appuie sur la surface externe de l'arbre 74, ou tout autre système d'étanchéité tel que joint tournant ou dispositif à labyrinthe, par exemple.

L'arbre 74 fait saillie à travers l'ouverture délimitée par la paroi 77 en se prolongeant à l'extérieur du boîtier par une partie 74a portant un organe d'accouplement mécanique sous forme par exemple de cannelures 80.

Dans l'exemple illustré, le PMG 30 est monté dans le boîtier 72 entre l'excitatrice 20 et le fond 76. Les aimants 34 du PMG sont fixés sur l'arbre 74 tandis que les enroulements de l'induit 36 du PMG situés en regard des aimants 34 sont supportés par une pièce 81 fixée au boîtier 72, à l'intérieur de celui-ci. Le courant produit par le PMG est transporté par le harnais 38 qui peut être relié directement à l'induit 36 en traversant la paroi du boîtier 72 de façon étanche ou, comme dans l'exemple illustré, en étant raccordé au bloc de connexion 75, lui-même relié à l'induit 36.

On notera, comme indiqué plus haut, que le PMG peut ne pas être nécessaire. On pourrait aussi intégrer le PMG au module de génératrice plutôt qu'au module d'excitatrice.

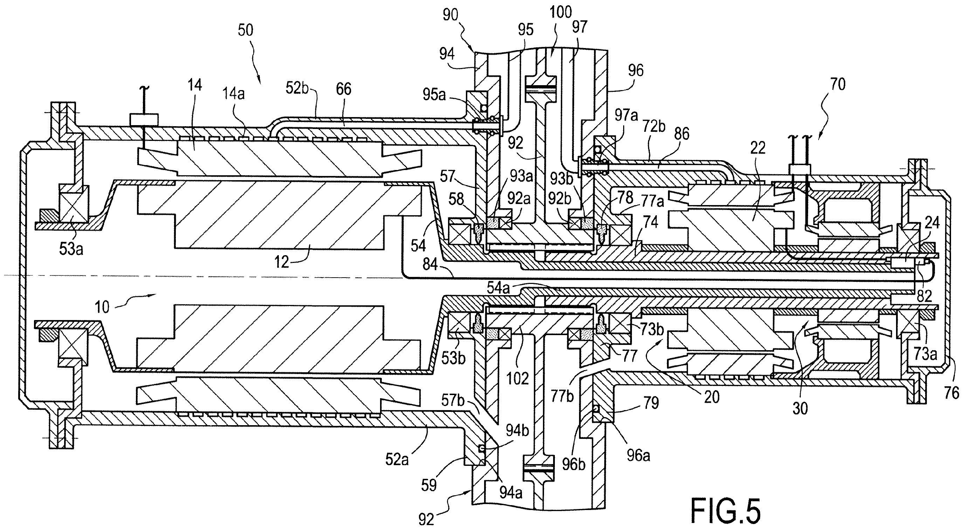

D'autres éléments des modules 50 et 70 seront décrits en référence aussi à la figure 5 qui montre les modules montés sur une boîte de transmission 90.

La boîte de transmission 90 comprend un carter 92 renfermant un train d'engrenages 100 et est couplée mécaniquement par une liaison de puissance à un arbre de turbine de turbine à gaz, telle qu'une turbine à gaz de moteur d'avion ou de moteur d'hélicoptère, ou encore d'un APU.

Dans le mode de réalisation de la figure 5, les modules 50 et 70 sont montés sur les parois latérales opposées, respectivement 94, 96, du carter 92, avec les arbres 54 et 74 coaxiaux.

Dans l'exemple illustré, l'arbre 74 est creux et forme un fourreau dans lequel pénètre la partie d'extrémité 54a de l'arbre 54 pour assurer un bon alignement. Les cannelures 60, 80 ont mêmes diamètre et denture et engrènent avec un même pignon 102 du train d'engrenages 100, les cannelures 60, 80 étant engagées avec des cannelures correspondantes formées dans un passage axial du pignon 102. L'axe du pignon 102 est supporté dans le carter 92 par des roulements 92a, 92b, des joints annulaires 93a, 93b étant insérés entre les roulements 92a, 92b et les parois avant des boîtiers 52, 72, respectivement.

En variante, seul l'un des arbres 54, 74 peut être couplé directement au pignon 102 par les cannelures qu'il porte, les arbres étant couplés en rotation entre eux par une liaison mécanique.

Dans l'exemple illustré, la liaison électrique entre l'induit 22 de l'excitatrice et l'inducteur 12 de la génératrice passe à l'intérieur des arbres 74, 54, tous deux étant creux. Il n'est toutefois pas nécessaire que l'arbre 54 soit creux dès lors qu'il ménage un passage pour la liaison électrique. Un connecteur 82 est fixé à l'extrémité interne de l'arbre 74 pour être facilement accessible après enlèvement du fond 76. Le connecteur 82 est relié au pont de diodes tournant 24 qui est fixé sur l'arbre 74 et qui est relié à l'induit 22.

Un harnais 84 relie, en passant le long des arbres 54, 74, l'inducteur 12 à une prise enfichée sur le connecteur 82.

La partie d'extrémité avant de la paroi périphérique du boîtier 52 pénètre dans une ouverture 94a formée dans la paroi 94 du carter de la boîte de transmission, avec joint d'étanchéité 94b. Au voisinage de son extrémité avant, le boîtier 52 présente une bride externe 59 qui vient en butée contre la paroi externe de la paroi 94, cette venue en butée coïncidant avec l'accouplement des cannelures 60 avec le pignon 102. Le boîtier 52 est fixé au carter 92 de la boîte de transmission par boulonnage de la bride 59 sur la paroi 94. D'autres modes de fixation pourront être adoptés comme des modes de fixation rapide de type connu avec organes de verrouillage élastiquement déformables.

De façon similaire, la partie d'extrémité avant de la paroi périphérique du boîtier 72 pénètre dans une ouverture 96a formée dans la paroi 96 du carter de la boîte de transmission, avec joint d'étanchéité 96b. Au voisinage de son extrémité avant, le boîtier 72 présente une bride externe 79 qui vient en butée contre la face externe de la paroi 96, cette venue en butée coïncidant avec l'accouplement des cannelures 80 avec le pignon 102. Le boîtier 72 est fixé au carter 92 de la boîte de transmission par boulonnage de la bride 79 sur la paroi 96 ou par d'autres moyens de fixation connus, notamment des moyens de fixation rapide avec organes de verrouillage élastiquement déformables.

Un montage des modules 50 et 70 sur la boîte de transmission 90 est ainsi réalisé avec accouplement des arbres 54, 74 avec un pignon de la boîte de transmission.

On notera que les dispositions des parties terminales externes des arbres 54 et 74 peuvent être inversées, l'arbre 74 se prolongeant par une partie terminale pénétrant dans un fourreau formé par l'arbre creux 54.

De façon classique, la boîte de transmission 90 est équipée d'un circuit d'alimentation en liquide de refroidissement et de lubrification avec un réservoir et une pompe de recirculation elle-même entraînée par couplage sur la boîte de transmission.

Les modules 50, 70 peuvent être alimentés en liquide de refroidissement/lubrification à partir du circuit de la boîte de transmission.

Ainsi, à cet effet, un conduit 66 d'alimentation du module 50 en liquide de refroidissement/lubrification est prévu dans un bossage 52b du boîtier 52 et s'ouvre à la surface de la bride 59 tournée vers la paroi 94 pour être raccordée à une canalisation 95 reliée au circuit de refroidissement/lubrification de la boîte de transmission. La liaison étanche entre le conduit 66 et la canalisation 95 est réalisée par un raccord 95a à travers la paroi 94. Le conduit 66 est relié à un circuit 14a de refroidissement de l'induit 14 de la génératrice 10 et est en outre relié à des gicleurs (non représentés) assurant notamment la lubrification des paliers 53a et 53b en formant un brouillard à l'intérieur du boîtier 52.

De façon similaire, un conduit 86 d'alimentation du module 70 en liquide de refroidissement/lubrification est prévu dans un bossage 72b du boîtier 72 et s'ouvre à la surface de la bride 79 tournée vers la paroi 96 pour être raccordée à une canalisation 97 reliée au circuit de refroidissement/lubrification de la boîte de transmission. La liaison étanche entre le conduit 86 et la canalisation 97 est réalisée par un raccord 97a à travers la paroi 96. Le conduit 86 est relié à des gicleurs (non représentés), assurant notamment la lubrification des paliers 73a, 73b en formant un brouillard à l'intérieur du boîtier 72.

Des passages 57b, 77b sont formés dans les parois 57-94 et 77-96 pour récupérer, dans le carter 92, le liquide de refroidissement/lubrification hors des volumes internes des boîtiers 52, 72 et permettre sa recirculation.

On notera que les joints d'étanchéité 58, 78 pourraient ici être omis. Ils permettent toutefois de séparer les circuits de circulation de liquide de refroidissement/lubrification dans les modules 50, 70 du circuit de circulation dans la boîte de transmission, et ainsi de limiter les risques de vidage accidentel de résidus d'huile lors de la maintenance et de transfert d'éventuelles particules solides entre le carter 92, d'une part, et les boîtiers 52, 72, d'autre part.

En variante, la circulation du liquide de refroidissement/lubrification dans l'un et/ou l'autre des modules 50, 70 pourrait être réalisée par des moyens autonomes propres.

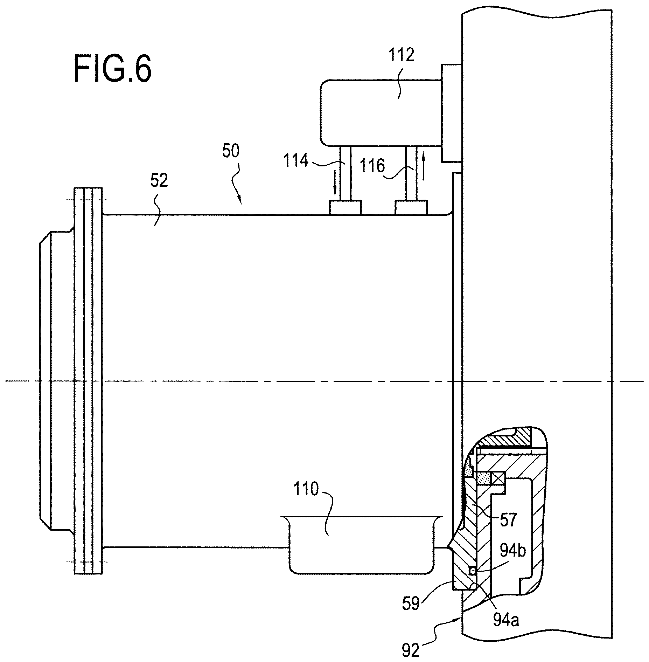

Une telle disposition est montrée très schématiquement par la figure 6 pour le module de génératrice 50. Une disposition semblable pourrait être adoptée pour le module d'excitatrice 70.

Selon cette variante, le module 50 est associé à un réservoir 110 de liquide de refroidissement/lubrification et à une pompe 112 assurant une circulation en continu dans le boîtier 52. La pompe alimente le boîtier 52 par une conduite 114 à travers une ouverture formée dans la paroi du boîtier, et est reliée au réservoir 110 par une conduite de retour 116. Une ouverture fait communiquer le volume interne du boîtier 52 avec le réservoir 110.

Le joint d'étanchéité 58 isole les circuits de circulation de liquide de refroidissement/lubrification à l'intérieur du boîtier 52 et du carter 92, la paroi 57 n'étant pas munie d'ouverture telle que le passage 57b de la figure 5.

L'architecture modulaire du S/G avec des modules distincts de génératrice et d'excitatrice est particulièrement avantageuse en ce qu'elle permet de limiter les masses en porte-à-faux sur le carter de la boîte de transmission en comparaison avec un montage d'un S/G complet sur un côté de la boîte. Le montage et le démontage des modules de génératrice et d'excitatrice sont aisés. Ainsi, le démontage d'un des modules ne nécessite que le désaccouplement entre le harnais 84 et le connecteur 82 avant retrait du boîtier du module. Les opérations de maintenance et de réparation sont simples et, en cas de dysfonctionnement, seul le module défaillant est à remplacer, et non le S/G au complet. Il est aussi possible, comme dans le mode de réalisation de la figure 5, de mutualiser les moyens de refroidissement/lubrification avec ceux de la boîte de transmission.

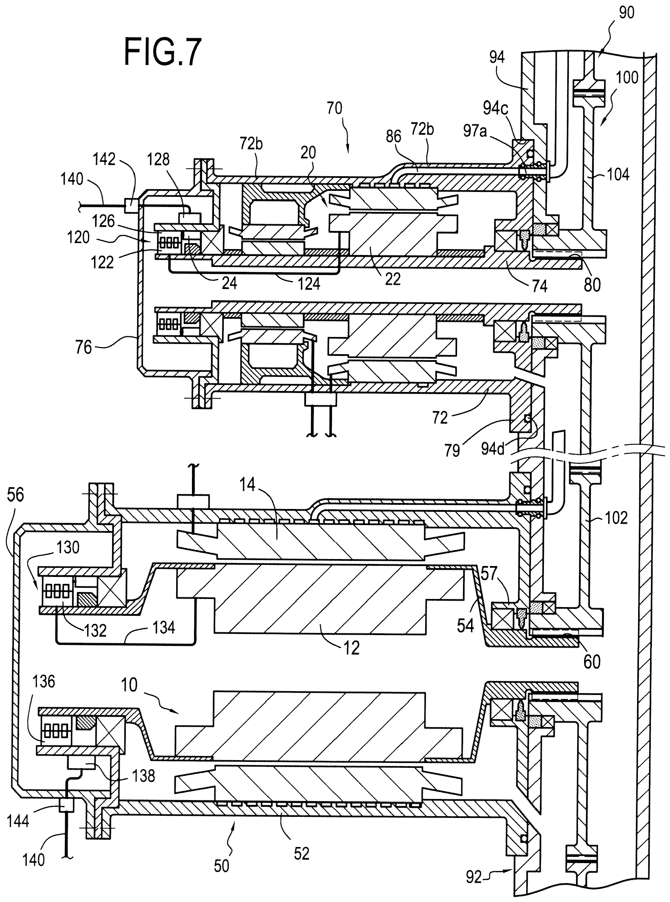

La figure 7 illustre un autre mode de réalisation dans lequel les modules 50 et 70 sont montés sur la boîte de transmission 90 avec leurs arbres 54, 74 non coaxiaux (les éléments communs avec le mode de réalisation de la figure 5 portant les mêmes références numériques).

Ainsi, dans l'exemple illustré par la figure 7, le module de génératrice 50 est monté comme montré sur la figure 5 tandis que le module d'excitatrice 70 est monté de façon similaire à celle montrée sur la figure 5, mais en étant fixé sur la même paroi 94 du carter 92 de la boîte de transmission. La partie avant du boîtier 72 avec la bride 79 s'engage alors dans une ouverture 94c de la paroi 94, avec joint d'étanchéité 94d. L'arbre 54 est dépourvu de partie terminale telle que celle 54a de la figure 5 et est ouvert à son extrémité pénétrant dans le carter 92.

Les cannelures 60, 80 portées par les arbres 54, 74 engrènent avec des pignons respectifs 102, 104.

On pourrait bien entendu coupler les arbres 54, 74 sur des pignons différents du train d'engrenages de la boîte de transmission en disposant les modules 50, 70 sur les côtés opposés du carter de la boîte de transmission.

Il est préférable, mais non nécessaire, que les arbres 54, 74 soient entraînés à même vitesse.

La liaison électrique entre l'induit 22 de l'excitatrice et l'inducteur 12 de la génératrice nécessite l'utilisation de raccords électriques tournants ou joints tournants.

Ainsi, un raccord tournant 120 a des bagues conductrices 122 solidaires en rotation de l'arbre 74 et reliées aux enroulements de l'induit 22 par des conducteurs respectifs réunis en un harnais 124 logé dans l'arbre creux 74. Le raccord 120 a des contacts fixes ou patins 126 en contact frottant avec les bagues 122. Les patins 126 sont reliés au pont des diodes 24 lui-même relié à un bloc de connexion 128.

Du côté du module de génératrice, un raccord 130 a des bagues conductrices 132 solidaires en rotation de l'arbre 54 et reliées aux enroulements de l'inducteur 12 par des conducteurs respectifs réunis en un harnais 134 logé dans l'arbre creux 54. Le raccord 130 a des contacts fixes ou patins 136 en contact frottant avec les bagues 132. Les patins 136 sont reliés à un bloc de connexion 138.

Les contacts fixes 126 du raccord 120 sont reliés aux contacts fixes respectifs 136 du raccord 130 par un harnais 140 qui est muni à chaque extrémité de prises engagées dans des blocs de connexion 142, 144 fixés à l'extérieur des fonds 76, 56 et reliés aux blocs 128, 138.

Une disposition non coaxiale des arbres 54, 74 requiert l'utilisation de joints ou raccords électriques tournants ou moyens équivalents de connexion électrique entre partie fixe et partie tournante, mais offre une plus grande flexibilité de montage des modules 50, 70 sur la boîte de transmission et permet de monter le pont de diodes 24, ou autre redresseur, sur une partie fixe, non soumise aux sollicitations entraînées par la rotation de l'arbre 74.

Deux S/G étant normalement entraînés par la boîte de transmission, on peut aussi envisager de monter deux excitatrices sur un même axe, pour alimenter des génératrices respectives. Les deux excitatrices peuvent être logées dans un même boîtier, avec un double bobinage ou disposées l'une derrière l'autre, ou dans deux boîtiers formant deux modules d'excitatrice coaxiaux montés de part et d'autre du carter de la boîte de transmission.

## Revendications

1. Ensemble comportant une boîte de transmission (90) de turbine à gaz, ayant un train d'engrenages (100) avec plusieurs pignons logés dans un carter (92), et au moins un démarreur-générateur modulaire de turbine à gaz couplé mécaniquement à la boite de transmission et comprenant une génératrice (10) avec un rotor (12) formant inducteur et un stator (14) formant induit et une excitatrice (20) avec un stator (26) formant inducteur et un rotor (22) formant induit, **caractérisé en ce que** le démarreur-générateur comporte :
- un premier module (50), ou module de génératrice, comprenant un premier boîtier (52), la génératrice (10) logée dans le premier boîtier et un premier arbre (54) solidaire en rotation du rotor (12) de la génératrice faisant saillie hors du premier boîtier (52) et portant un premier organe d'accouplement mécanique (60),
- un deuxième module (70), ou module d'excitatrice, comprenant un deuxième boîtier (72), l'excitatrice (20) logée dans le deuxième boîtier et un deuxième arbre (74) solidaire en rotation du rotor (22) de l'excitatrice, le deuxième arbre (74) étant distinct du premier arbre (54), faisant saillie hors du deuxième boîtier (72) et portant un deuxième organe d'accouplement mécanique (80), et
- une liaison électrique (84 ; 140, 134) comprenant un redresseur (24) et au moins un connecteur (82, 128, 138, 142, 144) pour relier l'induit (22) de l'excitatrice (20) à l'inducteur (12) de la génératrice (10),
chacun des premier et deuxième organes d'accouplement (60, 80) étant couplé à au moins un pignon (102, 104) de la boîte de transmission (90), et chacun des premier et deuxième boîtiers (52, 72) étant raccordé au carter (92) de la boite de transmission (90).

2. Ensemble selon la revendication 1, **caractérisé en ce que** la liaison électrique (84) est logée au moins partiellement dans les arbres.

3. Ensemble selon l'une quelconque des revendications 1 et 2 comprenant en outre un générateur à aimants permanents (30) ayant un rotor portant des aimants permanents et un stator formant induit, **caractérisé en ce que** le générateur à aimants permanents fait partie de l'un desdits modules, est logé à l'intérieur du boîtier de ce module et a son rotor solidaire en rotation de l'arbre de ce module.

4. Ensemble selon la revendication 3, **caractérisé en ce que** le générateur à aimants permanents (30) fait partie du module d'excitatrice (70).

5. Ensemble selon l'une quelconque des revendications 1 à 4, **caractérisé en ce qu'**au moins l'un des modules est associé à un dispositif (110, 112) d'alimentation en liquide de refroidissement/lubrification propre à ce module.

6. Ensemble selon la revendication 5, **caractérisé en ce que** l'arbre du module associé à un dispositif propre d'alimentation en liquide de refroidissement/lubrification fait saillie du boîtier de ce module à travers une ouverture munie d'un dispositif d'étanchéité (58).

7. Ensemble selon la revendication 1, **caractérisé en ce que** les premier et deuxième arbres (54, 74) sont coaxiaux et couplés à un même pignon (102) de la boîte de transmission, et les boîtiers (52, 72) des premier et deuxième modules sont raccordés séparément au carter (92) de la boîte de transmission (90) sur deux côtés opposés (94, 96) de celle-ci.

8. Ensemble selon la revendication 1, **caractérisé en ce que** les premier et deuxième arbres ne sont pas coaxiaux et les premier et deuxième organes d'accouplement (60, 80) sont couplés à des pignons respectifs distincts (102, 104) de la boîte de transmission.

9. Ensemble selon la revendication 8, **caractérisé en ce que** la liaison électrique comprend un premier raccord électrique tournant (120) ayant des contacts fixes et des contacts tournants reliés à l'induit de l'excitatrice, un deuxième raccord électrique (130) tournant ayant des contacts fixes et des contacts tournants reliés à l'inducteur de la génératrice, et une liaison fixe (140) reliant les contacts fixes du premier raccord tournant aux contacts fixes respectifs du deuxième raccord tournant.

10. Ensemble selon la revendication 9, **caractérisé en ce que** le redresseur est inséré dans la liaison fixe.

11. Ensemble selon l'une quelconque des revendications 1 à 10, **caractérisé en ce que** l'un au moins des modules est alimenté en liquide de refroidissement/lubrification à partir d'un circuit (95, 97) de liquide de refroidissement/lubrification de la boîte de transmission.

12. Turbine à gaz équipée d'un ensemble selon l'une quelconque des revendications 1 à 11.

## Patentansprüche

1. Anordnung, umfassend ein Gasturbinengetriebe (90), mit einem Getriebezug (100) mit mehreren Ritzeln, die in einem Gehäuse (92) untergebracht sind, und wenigstens einen modularen Gasturbinen-Starter-Generator, welcher mit dem Getriebe mechanisch gekoppelt ist und einen Generator (10) mit einem einen Induktor bildenden Rotor (12) und einem einen Anker bildenden Stator (14) sowie eine Erregermaschine (20) mit einem einen Induktor bildenden Stator (26) und einem einen Anker bildenden Rotor (22) umfasst, **dadurch gekennzeichnet, dass** der Starter-Generator umfasst:
- ein erstes Modul (50), oder Generatormodul, umfassend ein erstes Gehäuse (52), den Generator (10), welcher in dem ersten Gehäuse untergebracht ist, und eine mit dem Rotor (12) des Generators drehfest verbundene erste Welle (54), die aus dem ersten Gehäuse (52) hervorsteht und ein erstes mechanisches Kopplungsorgan (60) trägt,
- ein zweites Modul (70), oder Erregermaschinenmodul, umfassend ein zweites Gehäuse (72), die Erregermaschine (20), die in dem zweiten Gehäuse untergebracht ist, sowie eine mit dem Rotor (22) der Erregermaschine drehfest verbundene zweite Welle (74), wobei die zweite Welle (74) von der ersten Welle (54) getrennt ist, aus dem zweiten Gehäuse (72) hervorsteht und ein zweites mechanisches Kopplungsorgan (80) trägt, und
- eine elektrische Verbindung (84; 140, 134), die einen Gleichrichter (24) und wenigstens einen Verbinder (82, 128, 138, 142, 144) zum Verbinden des Ankers (22) der Erregermaschine (20) mit dem Induktor (12) des Generators (10) umfasst,
wobei ein jedes der ersten und zweiten Kopplungsorgane (60, 80) mit wenigstens einem Ritzel (102, 104) des Getriebes (90) gekoppelt ist und ein jedes der ersten und zweiten Gehäuse (52, 72) mit dem Gehäuse (92) des Getriebes (90) verbunden ist.

2. Anordnung nach Anspruch 1, **dadurch gekennzeichnet, dass** die elektrische Verbindung (84) wenigstens teilweise in den Wellen untergebracht ist.

3. Anordnung nach einem der Ansprüche 1 und 2, ferner umfassend einen Permanentmagnet-Generator (30), welcher einen Rotor, der Permanentmagnete trägt, und einen einen Anker bildenden Stator aufweist, **dadurch gekennzeichnet, dass** der Permanentmagnet-Generator zu einem der Module gehört, innerhalb des Gehäuses dieses Moduls untergebracht ist und sein Rotor mit der Welle dieses Moduls drehfest verbunden ist.

4. Anordnung nach Anspruch 3, **dadurch gekennzeichnet, dass** der Permanentmagnet-Generator (30) zu dem Erregermaschinenmodul (70) gehört.

5. Anordnung nach einem der Ansprüche 1 bis 4, **dadurch gekennzeichnet, dass** wenigstens eines der Module einer Vorrichtung (110, 112) zur Versorgung mit Kühl-/Schmierflüssigkeit zugeordnet ist, die diesem Modul eigen ist.

6. Anordnung nach Anspruch 5, **dadurch gekennzeichnet, dass** die Welle des Moduls, das einer eigenen Vorrichtung zur Versorgung mit Kühl-/Schmierflüssigkeit zugeordnet ist, aus dem Gehäuse dieses Moduls durch eine mit einer Dichtungseinrichtung (58) versehene Öffnung hervorsteht.

7. Anordnung nach Anspruch 1, **dadurch gekennzeichnet, dass** die erste und die zweite Welle (54, 74) koaxial sind und mit einem gleichen Ritzel (102) des Getriebes gekoppelt sind, und die Gehäuse (52, 72) des ersten und des zweiten Moduls mit dem Gehäuse (92) des Getriebes (90) an zwei gegenüberliegenden Seiten (94, 96) desselben separat verbunden sind.

8. Anordnung nach Anspruch 1, **dadurch gekennzeichnet, dass** die erste und die zweite Welle nicht koaxial sind und das erste und das zweite Kopplungsorgan (60, 80) mit jeweiligen separaten Ritzeln (102, 104) des Getriebes gekoppelt sind.

9. Anordnung nach Anspruch 8, **dadurch gekennzeichnet, dass** die elektrische Verbindung einen ersten elektrische Drehanschluss (120) mit festen Kontakten und drehbaren Kontakten, welche mit dem Anker der Erregermaschine verbunden sind, einen zweiten elektrischen Drehanschluss (130) mit festen Kontakten und drehbaren Kontakten, die mit dem Induktor des Generators verbunden sind, und eine feste Verbindung (140), welche die festen Kontakte des ersten Drehanschlusses mit den jeweiligen festen Kontakten des zweiten Drehanschlusses verbindet.

10. Anordnung nach Anspruch 9, **dadurch gekennzeichnet, dass** der Gleichrichter in die feste Verbindung eingesetzt ist.

11. Anordnung nach einem der Ansprüche 1 bis 10, **dadurch gekennzeichnet, dass** wenigstens eines der Module mit Kühl-/Schmierflüssigkeit aus einem Kühl-/Schmierflüssigkeitskreis (95, 97) des Getriebes versorgt wird.

12. Gasturbine, die mit einer Anordnung nach einem der Ansprüche 1 bis 11 ausgestattet ist.

## Claims

1. An assembly comprising a gearbox (90) for a gas turbine having a geartrain (100) with a plurality of gearwheels housed in a casing (92), and at least one modular starter/generator for a gas turbine mechanically coupled to the gearbox, and comprising a generator (10) with a rotor (12) forming a primary magnetic circuit and a stator (14) forming a secondary magnetic circuit, and an exciter (20) with a stator (26) forming a primary magnetic circuit and a rotor (22) forming a secondary magnetic circuit, **characterized in that** the starter/generator comprises:
• a first module (50) or generator module comprising a first casing (52), the generator (10) housed in the first casing and a first shaft (54) constrained to rotate with the rotor (12) of the generator projecting from the first casing (52) and carrying a first mechanical coupling member (60);
• a second module (70) or exciter module, comprising a second casing (72), the exciter (20) housed in the second casing, and a second shaft (74) secured to rotate with the rotor (22) of the exciter, the second shaft (74) being distinct from the first shaft (54), projecting from the second casing (72), and carrying a second mechanical coupling member (80); and
• an electrical connection (84; 140, 134) comprising a rectifier (24) and at least one connector (82, 128, 138, 142, 144) for connecting the secondary circuit (22) of the exciter (20) to the primary circuit (12) of the generator (10), each of the first and second coupling members (60, 80) being coupled to at least a gearwheel (102, 104) of the gearbox (90), and each of the first and second casings (52, 72) being connected to the casing (92) of the gearbox (90).

2. An assembly according to claim 1, **characterized in that** the electrical connection (84) is housed at least in part within the shafts.

3. An assembly according to claim 1 or claim 2, further comprising a permanent magnet generator (30) having a rotor carrying permanent magnets and a stator forming a secondary circuit, **characterized in that** the permanent magnet generator forms part of one of said modules, is housed inside the casing of the module, and has its rotor constrained to rotate with the shaft of that module.

4. An assembly according to claim 3, **characterized in that** the permanent magnet generator (30) forms part of the exciter module (70).

5. An assembly according to any one of claims 1 to 4, **characterized in that** at least one of the modules is associated with a device (110, 112) specific to the module for feeding it with cooling/lubricating liquid.

6. An assembly according to claim 5, **characterized in that** the shaft of the module associated with a specific device for feeding it with cooling/lubricating liquid projects from the casing of said module through an opening that is provided with a sealing device.

7. An assembly according to claim 1, **characterized in that** the first and second shafts (54, 74) share a common axis and are coupled to a common gearwheel (102) of the gearbox, and the casings (52, 72) of the first and second modules are separately connected to the casing (92) of the gearbox (90) on opposite sides (94, 96) thereof.

8. An assembly according to claim 1 **characterized in that** the first and second shafts are not on a common axis and the first and second coupling members (60, 80) are coupled to respective distinct gearwheels (102, 104) of the gearbox.

9. An assembly according to claim 8, **characterized in that** the electrical connection comprises a first rotary electrical coupling (120) having stationary contacts and rotary contacts connected to the secondary circuit of the exciter, a second rotary electrical coupling (130) having stationary contacts and rotary contacts connected to the primary circuit of the generator, and a stationary connection (140) connecting the stationary contacts of the first rotary coupling to the respective stationary contacts of the second rotary coupling.

10. An assembly according to claim 9, **characterized in that** the rectifier is inserted in the stationary connection.

11. An assembly according to any one of claims 1 to 10, **characterized in that** at least one of the modules is fed with cooling/lubricating liquid from a cooling/lubricating liquid circuit (95, 97) of the gearbox.

12. A gas turbine fitted with an assembly according to any one of claims 1 to 11.
